# EUROPÄISCHE PATENTSCHRIFT

(11) **EP 0 941 613 B1**
(45) Veröffentlichungstag und Bekanntmachung des Hinweises auf die Patenterteilung: **13.03.2002**
(21) Anmeldenummer: 97912047.4
(22) Anmeldetag: 14.10.1997
(51) Int. Cl.: H04N 7/36

(54) **VERFAHREN ZUR BILDCODIERUNG EINES DIGITALISIERTEN BILDES**
METHOD FOR ENCODING A DIGITALIZED PICTURE
PROCEDE DE CODAGE D'UNE IMAGE NUMERISEE

(30) Priorität: 26.11.1996 DE 19648963
(43) Veröffentlichungstag der Anmeldung: 15.09.1999
(73) Patentinhaber: SIEMENS AKTIENGESELLSCHAFT, 80333 München (DE)
(72) Erfinder: KAUP, Andre, D-85635 Höhenkirchen (DE)
(86) Internationale Anmeldenummer: DE9702350
(87) Internationale Veröffentlichungsnummer: WO9824239

(56) Entgegenhaltungen:
- EP-A- 0 525 310
- WO-A-97/13372
- YANBIN YU ET AL: "PICTORIAL TRANSFORM CODING FOR TESSELLATING ARBITRARY SHAPED REGIONS" SIGNAL PROCESSING THEORIES AND APPLICATIONS, BARCELONA, SEPT. 18 - 21, 1990, Bd. 2, 18.September 1990, TORRES L;MASGRAU E; LAGUNAS M A, Seiten 901-904, XP000365734
- CHANG S -F ET AL: "TRANSFORM CODING OF ARBITRARILY-SHAPED IMAGE SEGMENTS" PROCEEDINGS OF FIRST ACM INTERNATIONAL CONFERENCE ON MULTIMEDIA, 2-6 AUGUST 1993, ANAHEIM, CA, US, 2.August 1993, Seiten 83-90, XP000607524

## Beschreibung

Neuartige Bewegtbildkompressionsverfahren basieren auf einer Zerlegung des Bildinhaltes in sogenannte Bildobjekte mit beliebiger Berandung. Die einzelnen Bildobjekte werden in verschiedenen sogenannten Video-Object-Plains (VOPs) separat codiert, übertragen und im Empfänger decodiert und wieder "zusammengesetzt". Herkömmliche Bildkompressionsverfahren beruhen auf einer Zerlegung des gesamten Bildes in quadratische Bildblöcke. Dieses Prinzip kann auch bei den objektbasierten Verfahren übernommen werden. Probleme entstehen allerdings bei der Codierung der Bildblöcke, die sich an dem Rand des jeweiligen Bildobjektes befinden, da meist die Objektberandung nicht mit den Blockrändern übereinstimmt. Besonders kritisch ist in diesem Zusammenhang eine sogenannte bewegungskompensierte Prädiktion dieser Randblöcke.

Für die Bewegungsschätzung und die Bewegungskompensation gibt es eine Vielzahl unterschiedlicher Suchstrategien. Für blockbasierte Bildkompressionsverfahren wird meist das sogenannte "Block-Matching-Verfahren" eingesetzt. Es beruht darauf, daß der zu codierende Bildblock mit gleich großen Blöcken eines Referenzbildes verglichen wird. Einer der Referenzbildblöcke befindet sich auf der gleichen Position wie der zu codierende Bildblock, die anderen Referenzbildblöcke sind gegenüber diesem örtlich verschoben. Bei einem großen Suchbereich in horizontaler und vertikaler Richtung ergeben sich somit sehr viele Suchpositionen, so daß bei einer sogenannten vollständigen Suche ("Full-Search") auch entsprechend viele Blockvergleiche ("Matchings") durchgeführt werden müssen. Als Kriterium für die Übereinstimmungsgüte zwischen dem jeweils zu codierenden Block und dem Referenzblock wird üblicherweise die Summe der absoluten Differenzen der Codierungsinformation, die jeweils jedem Bildpunkt zugeordnet wird, verwendet.

Unter Codierungsinformation ist im Rahmen dieses Dokumentes beispielsweise die-Luminanzinformation, mit der jeweils ein Luminanzwert beschrieben wird, den ein Bildpunkt aufweist, oder auch eine Farbinformation, d. h. der dem jeweiligen Bildpunkt zugeordnete Chrominanzwert, zu verstehen.

Es ist bei der Bewegungskompensation aus dem Dokument [1] bekannt, im Rahmen der Bewegungskompensation ein sog. Padding durchzuführen, wobei das Padding bei dem Verfahren aus dem Dokument [1] über das gesamte Gebiet des Referenzbildes RB erfolgt, das nicht zu dem Bildobjekt BO gehört.

Aus [2] ist das blockbasierte Bildcodierungsverfahren MPEG 2 bekannt.

In [3] ist ein Verfahren zur Segmentierung von Bildobjekten aus einem Bild bekannt.

### 3. Kurzbeschreibung der Erfindung

Der Erfindung liegt das Problem zugrunde, ein Verfahren zur Bildcodierung, ein Verfahren zur Bilddecodierung sowie eine Anordnung zur Durchführung der Verfahren anzugeben, mit der die Bildcodierung bzw. die Bilddecodierung mit gegenüber bekannten Verfahren reduziertem Rechenzeitbedarf möglich wird.

Das Problem wird durch das Verfahren zur Bildcodierung gemäß Patentanspruch 1, das Verfahren zur Bilddecodierung gemäß Patentanspruch 4 sowie durch die Anordnung gemäß Patentanspruch 6 gelöst.

Bei dem Verfahren zur Bildcodierung wird in dem Bild mindestens ein Bildobjekt ermittelt. Ferner wird das Bild in Bildblöcke abgeteilt und für die Bildblöcke wird eine Bewegungsschätzung durchgeführt. Bei der Bewegungsschätzung eines Bildblocks, der mindestens eine Objektkante des Bildobjektes aufweist, wird ein Padding durchgeführt, wobei das Padding lediglich bezüglich Bildpunkten durchgeführt wird, die sich innerhalb des Bildobjektes befinden.

Bei dem Verfahren zur Bilddecodierung wird zur Bewegungskompensation eines Bildblocks, der mindestens eine Objektkante eines Bildobjekts aufweist, ebenso ein Padding lediglich bezüglich Bildpunkten durchgeführt, die sich innerhalb des Bildobjektes befinden.

Bei der Anordnung zur Durchführung mindestens einer der Verfahren ist zum einen ein Bildspeicher zur Speicherung der digitalen Bilddaten sowie eine Prozessoreinheit zur Durchführung der einzelnen Verfahrensschritte entweder des Verfahrens zur Bildcodierung oder auch des Verfahrens zur Bilddecodierung vorgesehen.

Beide Verfahren sowie die Anordnung weisen den erheblichen Vorteil auf, daß eine erhebliche Rechenzeiteinsparung bei der Durchführung der Bildcodierung bzw. der Bilddecodierung erreicht wird. Dies ist darauf zurückzuführen, daß die zur Bewegungsschätzung bzw. zur Bewegungskompensation erforderliche Bildpunktergänzung nicht mehr unabhängig von der Konturinformation an einem festen Blockraster ausgerichtet ist, sondern jeweils so viel Bildinformation ergänzt wird, wie dies unter Berücksichtigung des momentanen Bewegungsvektors und der bekannten Objektkontur erforderlich ist.

Vorteilhafte Weiterbildungen der Erfindung ergeben sich aus den abhängigen Ansprüchen.

Bei dem Verfahren zur Bildcodierung ist es vorteilhaft, das Padding im Rahmen der Bewegungskompensation zur internen Rekonstruktion des Bildes auf die gleiche, oben beschriebene Weise durchzuführen.

Mit dieser Vorgehensweise wird eine weitere Rechenzeiteinsparung bei der Bildcodierung erreicht, da auch bei der internen Rekonstruktion die vorteilhafte Vorgehensweise durchgeführt wird.

Ferner ist es bei dem Verfahren zur Bildcodierung vorteilhaft, Werte von Codierungsinformationen zuvor gepaddeter Bildpunkte zu speichern und bei der Bewegungsschätzung weiterer Bildblöcke wieder zu verwenden. Auf diese Weise wird eine weitere Rechenzeiteinsparung erreicht, da ein Padding von Bildpunkten, die bei vorangegangenen Bewegungsschätzungen schon "gepaddet" wurden, und somit eine "doppelte" Durchführung des Paddings vermieden wird.

### 4. Kurzbeschreibung der Figuren

In den Figuren sind Ausführungsbeispiele der Erfindung dargestellt, die im weiteren näher erläutertert werden.

Es zeigen
- Fig. 1: eine Rechneranordnung mit zwei Rechnern und einer Kamera;
- Fig. 2a und 2b: ein zu codierendes Bild (Fig. 2b) und ein Referenzbild (Fig. 2a) anhand dessen das Prinzip des Verfahrens zur Bilddecodierung dargestellt wird;
- Fig. 3: einen Objektrandbildblock in einem zu decodierenden Bild sowie der Referenzbildblock in einem Referenzbild;
- Fig. 4: zwei zu codierenden Bilder sowie ein Referenzbild zur Darstellung des Verfahrens zur Bildcodierung;
- Fig. 5a und 5b: zwei zu codierende Bildblöcke mit jeweils einem Referenzbildblock aus einem Referenzbild.

### 5. Figurenbeschreibung

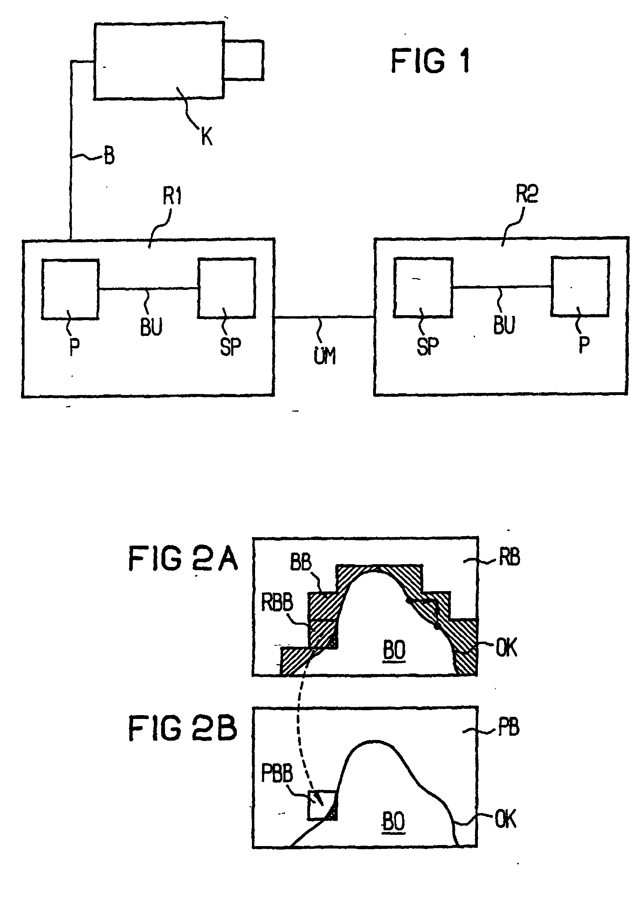

In Fig. 1 ist eine Kamera K dargestellt, mit der Bilder aufgenommen werden. Die Kamera K kann beispielsweise eine beliebige analoge Kamera K sein, die Bilder einer Szene aufnimmt und diese Bilder entweder in der Kamera K digitalisiert oder auch analog zu einem Rechner R1 überträgt, in dem dann entweder die digitalisierten Bilder verarbeitet werden oder die analogen Bilder zu digitalisierten Bildern umgewandelt werden und die digitalisierten Bilder verarbeitet werden.

Die Kamera K kann jedoch auch eine digitale Kamera K sein, mit der direkt digitalisierte Bilder B aufgenommen und dem Rechner R1 zur Weiterverarbeitung zugeführt werden.

Der Rechner R, der beispielsweise auch als eine eigenständige Anordnung, die die im weiteren beschriebenen Verfahrensschritte durchführt, ausgestaltet sein kann, beispielsweise als eine eigenständige Computerkarte, die in einem Rechner installiert ist.

Der Rechner R1 weist eine Prozessoreinheit P auf, mit der die im weiteren beschriebenen Verfahrensschritte der Bewegungsschätzung oder der Bewegungskompensation sowie eventuell weitere Verfahrensschritte beispielsweise zur Bildcodierung durchgeführt werden. Die Prozessoreinheit P ist beispielsweise über einen Bus BU mit einem Speicher SP, in dem die Bilddaten gespeichert werden, gekoppelt.

Das Verfahren zur Bewegungsschätzung oder Bewegungskömpensation kann sowohl zur Bildcodierung als auch zur Bilddecodierung vorteilhaft eingesetzt werden.

Es ist vorgesehen, in dem Rechner R1 die Bildcodierung vorzunehmen und nach Übertragung der komprimierten Bilddaten über ein Übertragungsmedium ÜM zu einem weiteren Rechner R2 in dem weiteren Rechner R2 die Bilddecodierung durchzuführen. Der weitere Rechner R2 weist beispielsweise den gleichen Aufbau auf wie der erste Rechner R1, also den Speicher SP, der über den Bus BÜ mit der Prozessoreinheit P gekoppelt ist.

Neuartige Bewegtbildkompressionsverfahren, beispielsweise die Verfahren nach dem zukünftigen MPEG4-Standard, basieren auf einer Zerlegung des Bildinhaltes des digitalisierten Bildes B, welches eine beliebige Anzahl von Bildpunkten BP aufweist, in eine beliebige Anzahl von Bildobjekten BO.

In Fig. 2a ist ein Referenzbild RB dargestellt, welches ein Bildobjekt BO mit einer Objektkante OK und Bildblöcken BB dargestellt. Bei der Bilddecodierung ist das Referenzbild RB schon decodiert und liegt in decodiertem Zustand in dem Bildspeicher SP eines Rechners R1, R2 vor.

Das nunmehr zu prädizierende Bild PB wird im Rahmen der Bilddecodierung rekonstruiert.

Zur Bilddecodierung wird eine Bewegungskompensation durchgeführt, bei der ausgehend von übertragener, für den Bildbereich vorhandener Konturinformation über in dem Bild bzw. Bildblock BB enthaltene Bildobjekte BO und dem Bewegungsvektor, der dem zu prädizierenden Bildblock PBB zugeordnet wurde, eine Rekonstruktion des zu prädizierenden Bildes PB, insbesondere des zu prädizierenden Bildblock PBB erfolgt.

Unter Padding sind im Rahmen dieses Dokumentes verschiedenste Verfahren zur Ergänzung von Codierungsinformation, die einzelnen Bildpunkten BP des Bildes B zugeordnet werden, zu verstehen.

Unter Codierungsinformation ist in diesem Zusammenhang beispielsweise Luminanzinformation (Helligkeitsinformation) oder Chrominanzinformation (Farbinformation) zu verstehen, die jeweils einen Bildpunkt BP zugeordnet wird.

Das im weiteren beschriebene Verfahren wird zur einfacheren Darstellung anhand eines Bildblocks BB, welcher beispielsweise 8x8 aufweist, beschrieben. Es ist jedoch ohne Einschränkung der Allgemeingültigkeit ohne weiteres auch für Makroblöcke, die üblicherweise aus 4 oder auch 16 Bildblöcken bestehen, anwendbar. Auch können im Rahmen des Verfahrens beliebig andere Elementareinheiten des jeweils zugrundeliegenden Codierverfahrens berücksichtigt werden, beispielsweise Rechtecke oder Dreiecke, usw. beliebiger Form und Größe. Somit ist unter einem Bildblock eine Elementareinheit beliebibiger Form und Größe zu verstehen, in die das Bild B aufgeteilt wird, und für die das jeweilige Codierungsverfahren erfolgt.

Ein Padding kann auf verschiedenste Arten erfolgen, beispielsweise nach einer der folgenden Vorgehensweisen:
a) Den zu paddenden Bildpunkten wird ein vorgebbarer Wert der Codierungsinformation zugeordnet.
b) Den zu paddenden Bildpunkten wird ein Wert der Codierungsinformation zugeordnet, der sich aus der Codierungsinformation von Bildpunkten des Bildblocks ergibt, für die kein Padding erfolgt.
c) Den zu paddenden Bildpunkten wird ein Wert einer Codierungsinformation zugeordnet, der sich aus einem Mittelwert der Codierungsinformation von Bildpunkten des Bildblockes ergibt, für die kein Padding erfolgt.
d) Den zu paddenden Bildpunkten wird ein Wert einer Codierungsinformation zugeordnet, der sich aus einer Tiefpaßergänzung der Codierungsinformation von Bildpunkten des Bildblocks ergibt, für die kein Padding erfolgt.
e) Den zu paddenden Bildpunkten wird ein Wert einer Codierungsinformation zugeordnet, der sich aus einer vorgebbaren konformen Abbildung der Codierungsinformation von Bildpunkten des Bildblocks ergibt, für die kein Padding erfolgt.
f) Den zu paddenden Bildpunkten wird ein Wert der Codierungsinformation zugeordnet, der sich nach einem in dem Dokument [1] beschriebenen sog. repetitiven Padding ergibt.

Bei der Bewegungskompensation für das zu prädizierende Bild PBB ist für den jeweils zu prädizierenden Bildblock PBB die Konturinformation des Bildobjekts BO enthalten. Damit ist für den zu prädizierenden Bildblock PBB bekannt, durch welche Bildpunkte die Objektkante OK gebildet wird, welche Bildpunkte BP sich innerhalb des Bildobjekts BO befinden, und welche Bildpunkte BP sich außerhalb des Bildobjekts BO befinden.

Ferner ist ausgehend von einem Referenzbildblock RBB, dessen Codierungsinformation schon bei der Decodierung des Referenzbildes RB ausgenutzt wurde, die Bildinformation bekannt. Ferner ist dem jeweiligen Referenzbildblock RBB ein Bewegungsvektor BV zugeordnet, mit der die örtliche Verschiebung des Referenzbildblocks RBB beschrieben wird, um die der Referenzbildblock RBB verschoben wird, um den zu prädizierenden Bildblock PBB zu ergeben.

Bei der Bewegungskompensation wird bei dem Verfahren für den zu prädizierenden Bildblock PBB jeweils ein Padding durchgeführt, wobei das Padding nur auf diejenigen Bildpunkte BP des zu prädizierenden Bildblocks PBB, die eine Objektkante OK enthalten, angewendet wird, die sich innerhalb des Bildobjekts BO des zu prädizierenden Bildblocks PBB befinden. Für Bildpunkte BP, die sich nicht innerhalb des Bildobjekts BO in dem zu prädizierenden Bildblock PBB befinden, erfolgt kein Padding.

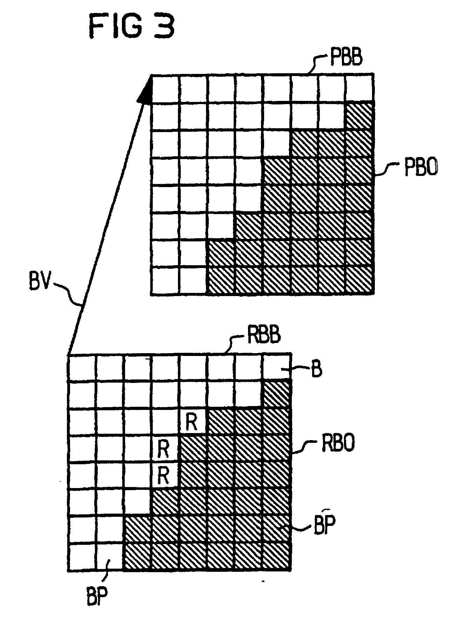

Dieses Vorgehen ist in den Fig. 3 dargestellt, in der ein Referenzbildblock RBB, der zu prädizierende Bildblock PBB sowie der Bewegungsvektor BV, der dem Referenzbildblock RBB zugeordnet ist, dargestellt.

Mit dem Buchstaben R sind diejenigen Bildpunkte BP markiert, für die ein Padding durchgeführt wird. Die zu paddenden Bildpunkte ergeben sich beispielsweise dadurch, daß die Objektkante OK im zu prädizierenden Bildblock PBB der Objektkante OK des zugehörigen Referenzbildblocks RBB überlagert wird und nur diejenigen Bildbunkte eine Bildpunktergänzung, d. h. Padding, erfahren, die
- außerhalb des Referenzobjekts RBO und
- innerhalb des zu prädizierenden Bildobjekts PBO liegen.

Danach kann über den Bewegungsvektor BV für alle innerhalb des Bildobjekts BO liegenden Bildpunkte eine bewegungskompensierte Prädiktion durch Verschieben der Bildpunkte entlang beispielsweise der Bewegungstrajektorie ermittelt werden. Für die außerhalb des Bildobjekts BO liegenden Bildpunkte BP wird keine Prädiktion ermittelt.

Es ist ebenso in einer Variante des Verfahrens vorgesehen, daß zuerst die Verschiebung der innerhalb der Objektkante OK des Referenzbildblocks RBB gegebenen Bildpunkte BP durchgeführt wird und anschließend die Bildpunktergänzung bis zur Objektkante OK des zu prädizierenden Bildblocks PBB erfolgt. In diesem Fall stehen die bereits ergänzten Bildpunkte BP allerdings nicht mehr für eine Prädiktion eines anderen Objektrandbildblocks zur Verfügung und müßten erneut ermittelt werden.

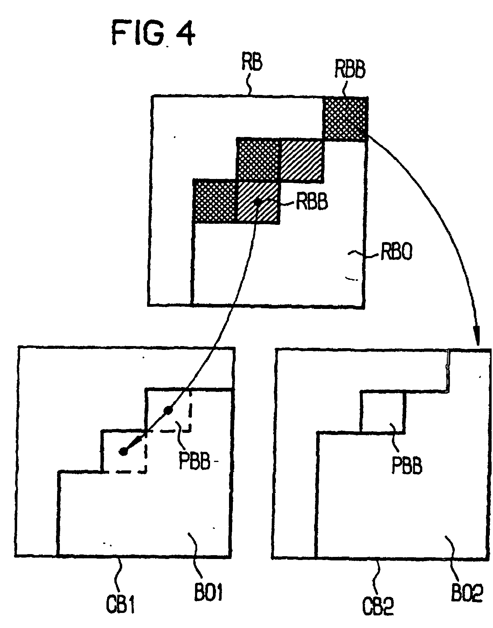

In Fig. 4 sind ein Referenzbild RB und zwei zu codierende Bilder CB1, CB2, für die jeweils eine Bewegungsschätzung durchgeführt wird, dargestellt.

Es ist das Referenzbildobjekt RBO, ein erstes Bildobjekt BO1 und ein zweites Bildobjekt BO2 dargestellt.

Für Objektrandbildblöcke des ersten Bildobjekts BO1 und des zweiten Bildobjekts BO2 wird eine Bewegungsschätzung im Rahmen der Bildcodierung durchgeführt.

Dies erfolgt wiederum auf die Weise, daß ein Padding im Rahmen der Bewegungsschätzung durchgeführt wird, und zwar nur für die Bereiche des Objektrandbildblocks OBB, die sich innerhalb des ersten Bildobjekts BO1 bzw. innerhalb des zweiten Bildobjekts BO2 befinden.

Für die sich außerhalb des jeweiligen Bildobjekts BO1, BO2 befindenden Bildpunkte BP wird kein Padding und somit auch keine Prädiktion durchgeführt.

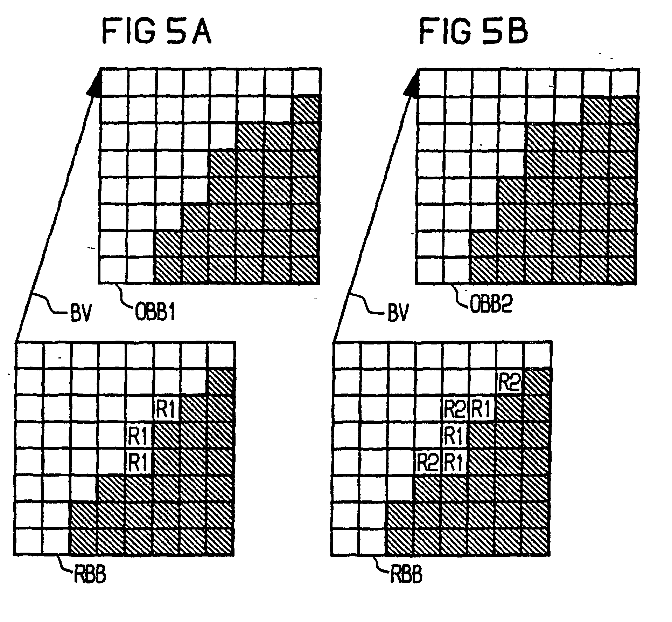

Dieses Prinzip ist jeweils für einen ersten Objektrandbildblock OBB1 und einen zweiten Objektrandbildblock OBB2 in Fig. 5a bzw. Fig. 5b dargestellt. Ferner ist jeweils auch der Referenzbildblock RBB mit dem dem Referenzbildblock zugeordneten Bewegungsvektor-BV in den Fig. 5a und 5b dargestellt.

In dem Referenzbildblock RBB sind bei der Bewegungsschätzung für den ersten Objektrandbildblock OBB1 die Bildpunkte mit R1 bezeichnet, für die ein Padding durchgeführt wird. In Fig. 5b ist zum einen mit R1 jeweils ein Bildpunkt aus dem Padding für den das erste Objektrandbildblock OBB1 dargestellt und mit R2 ist jeweils ein Bildpunkt bezeichnet, für den ein Padding im Rahmen der Bewegungsschätzung für den zweiten Objektrandbildblock OBB2 durchgeführt wurde.

Es ist in einer Weiterbildung des Verfahrens ferner vorgesehen, jeweils im Rahmen der Bewegungsschätzung nach der Bewegungsschätzung für einen Objektrandbildblock OBB die Werte der gepaddeten Bildpunkte zu speichern und bei einer weiteren Bewegungsschätzung für einen weiteren Objektrandbildblock OBB2 weiterzuverwenden und jeweils nur noch die dann im weiteren erforderlichen zu paddenden Bildpunkte tatsächlich auch noch zu ergänzen.

Auf diese Weise wird eine erhebliche weitere Rechenzeiteinsparung bei der Bewegungsschätzung erreicht.

Ferner ist es in einer Weiterbildung vorgesehen auch bei der Bildcodierung im Rahmen einer internen Bildrekonstruktion bei der dazu erforderlichen Bewegungskompensation ebenso das oben beschriebene Verfahren zur Bilddecodierung, d. h. Bewegungskompensation durchzuführen.

Im Rahmen dieses Dokumentes wurde folgende Veröffentlichung zitiert:
[1] ISO/IEC JTC1/SC29/WG11, Coding of moving pictures and associated audion information, MPEG 96/N1380, MPEG4 Video Verification Model, Version 4.0, Seiten 31 bis 35, Chicago, Oktober 1996
[2] J. De Lameillieure und R. Schäfer, MPEG-2-Bildcodierung für das digitale Fernsehen, Fernseh- und Kino-Technik,-48. Jahrgang, Nr. 3, S. 99 - 107, 1994
[3] Xiaolin Wu und Yonggang Fang, A Segmentation-Based Predicitve Multiresolution Image Coder, IEEE Transactions on Image Processing, Vol. 4, No.1, S. 34 - 46, Januar 1995

## Patentansprüche

1. Verfahren zur Bildcodierung eines digitalisierten Bildes mit einer beliebigen Anzahl von Bildpunkten,
- bei dem in dem Bild (B) mindestens ein Bildobjekt (BO) ermittelt wird, welches eine beliebige Anzahl von Bildpunkten (BP) aufweist,
- bei dem das Bild in Bildblöcke aufgeteilt wird,
- bei dem für die Bildblöcke eine Bewegungsschätzung durchgeführt wird,
- bei dem bei der Bewegungsschätzung eines Objektrandbildblocks (OBB), der mindestens eine Objektkante (OK) des Bildobjekts (BO) aufweist, eine Bildpunktergänzung durchgeführt wird, und
- bei dem die Bildpunktergänzung lediglich bezüglich Bildpunkten durchgeführt wird, die sich innerhalb des Bildobjekts (BO) befinden.

2. Verfahren nach Anspruch 1,
- bei dem zur internen Rekonstruktion des Bildes eine Bewegungskompensation des Bildblocks, für den eine Bewegungsschätzung durchgeführt wurde, erfolgt,
- bei dem bei der Bewegungskompensation des Objektrandbildblocks, der mindestens eine Objektkante des Bildobjekts (BO) aufweist, eine Bildpunktergänzung durchgeführt wird, und
- bei dem die Bildpunktergänzung lediglich bezüglich Bildpunkten durchgeführt wird, die sich innerhalb des Bildobjekts (BO) befinden.

3. Verfahren nach Anspruch 1 oder 2,
- bei dem Codierungsinformation ergänzter Bildpunkte gespeichert wird, und
- bei dem die Codierungsinformation bei der Bewegungsschätzung weiterer Bildblöcke wiederverwendet wird.

4. Verfahren zur Bilddecodierung eines digitalisierten Bildes (B) mit einer beliebigen Anzahl von Bildpunkten (BP),
- bei dem das Bild mindestens ein Bildobjekt (BO) aufweist, welches eine beliebige Anzahl von Bildpunkten aufweist,
- bei dem das Bild Bildblöcke (BB) aufweist,
- bei dem für die Bildblöcke eine Bewegungskompensation durchgeführt wird,
- bei dem bei der Bewegungskompensation eines Objektrandbildblocks (OBB), der mindestens eine Objektkante (OK) des Bildobjekts (BO) aufweist, eine Bildpunktergänzung durchgeführt wird, und
- bei dem die Bildpunktergänzung lediglich bezüglich Bildpunkten durchgeführt wird, die sich innerhalb des Bildobjekts (BO) befinden.

5. Verfahren nach einem der Ansprüche 1 bis 4,
bei dem die Bildpunktergänzung nach einer der folgenden Vorgehensweisen erfolgt:
- den zu ergänzenden Bildpunkten wird ein vorgebbarer Wert einer Codierungsinformation zugeordnet,
- den zu ergänzenden Bildpunkten wird ein Wert einer Codierungsinformation zugeordnet, der sich aus der Codierungsinformation von Bildpunkten des Bildblocks ergibt, für die keine Bildpunktergänzung erfolgt,
- den zu ergänzenden Bildpunkten wird ein Wert einer Codierungsinformation zugeordnet, der sich aus einem Mittelwert der Codierungsinformation von Bildpunkten des Bildblocks ergibt, für die keine Bildpunktergänzung erfolgt,
- den zu ergänzenden Bildpunkten wird ein Wert einer Codierungsinformation zugeordnet, der sich aus einer Tiefpaßergänzung der Codierungsinformation von Bildpunkten des Bildblocks ergibt, für die keine Bildpunktergänzung erfolgt, oder
- den zu ergänzenden Bildpunkten wird ein Wert einer Codierungsinformation zugeordnet, der sich nach einer repetitiven Bildpunktergänzung ergibt.

6. Vorrichtung zur Bildcodierung eines digitalisierten Bildes (B) mit einer beliebigen Anzahl von Bildpunkten (BP), mit einer Prozessoreinheit (P), die derart eingerichtet ist, daß
- in dem Bild mindestens ein Bildobjekt (BO) ermittelt wird, welches eine beliebige Anzahl von Bildpunkten aufweist,
- das Bild in Bildblöcke (BB) aufgeteilt wird,
- für die Bildblöcke eine Bewegungsschätzung durchgeführt wird,
- bei der Bewegungsschätzung eines Objektrandbildblocks (OBB), der mindestens eine Objektkante (OK) des Bildobjekts (BO) aufweist, eine Bildpunktergänzung durchgeführt wird, und
- die Bildpunktergänzung lediglich bezüglich Bildpunkten durchgeführt wird, die sich innerhalb des Bildobjekts (BO) befinden.

7. Vorrichtung nach Anspruch 6,
bei der die Prozessoreinheit derart eingerichtet ist, daß
- zur internen Rekonstruktion des Bildes eine Bewegungskompensation des Bildblocks, für den eine Bewegungsschätzung durchgeführt wurde, erfolgt,
- bei der Bewegungskompensation des Objektrandbildblocks, der mindestens eine Objektkante des Bildobjekts (BO) aufweist, eine Bildpunktergänzung durchgeführt wird, und
- die Bildpunktergänzung lediglich bezüglich Bildpunkten durchgeführt wird, die sich innerhalb des Bildobjekts (BO) befinden.

8. Vorrichtung nach Anspruch 6 oder 7,
bei der die Prozessoreinheit derart eingerichtet ist, daß
- Codierungsinformation ergänzter Bildpunkte gespeichert wird, und
- die Codierungsinformation bei der Bewegungsschätzung weiterer Bildblöcke wiederverwendet wird.

9. Vorrichtung zur Bilddecodierung eines digitalisierten Bildes (B) mit einer beliebigen Anzahl von Bildpunkten (BP), mit einer Prozessoreinheit (P), die derart eingerichtet ist, daß
- das Bild mindestens ein Bildobjekt (BO) aufweist, welches eine beliebige Anzahl von Bildpunkten (BP) aufweist,
- das Bild Bildblöcke (BB) aufweist,
- für die Bildblöcke eine Bewegungskompensation durchgeführt wird,
- bei dem bei der Bewegungskompensation eines Objektrandbildblocks (OBB), der mindestens eine Objektkante (OK) des Bildobjekts (BO) aufweist, eine Bildpunktergänzung durchgeführt wird, und
- bei der die Bildpunktergänzhng lediglich bezüglich Bildpunkten durchgeführt wird, die sich innerhalb des Bildobjekts (BO) befinden.

10. Vorrichtung nach einem der Ansprüche 6 bis 9,
bei der die Prozessoreinheit derart eingerichtet ist, daß die Bildpunktergänzung nach einer der folgenden Vorgehensweisen erfolgt:
- den zu ergänzenden Bildpunkten wird ein vorgebbarer Wert einer Codierungsinformation zugeordnet,
- den zu ergänzenden Bildpunkten wird ein Wert einer Codierungsinformation zugeordnet, der sich aus der Codierungsinformation von Bildpunkten des Bildblocks ergibt, für die keine Bildpunktergänzung erfolgt,
- den zu ergänzenden Bildpunkten wird ein Wert einer Codierungsinformation zugeordnet, der sich aus einem Mittelwert der Codierungsinformation von Bildpunkten des Bildblocks ergibt, für die keine Bildpunktergänzung erfolgt,
- den zu ergänzenden Bildpunkten wird ein Wert einer Codierungsinformation zugeordnet, der sich aus einer Tiefpaßergänzung der Codierungsinformation von Bildpunkten des Bildblocks ergibt, für die keine Bildpunktergänzung erfolgt, oder
- den zu ergänzenden Bildpunkten wird ein Wert einer Codierungsinformation zugeordnet, der sich nach einer repetitiven Bildpunktergänzung ergibt.

## Claims

1. Method for the picture coding of a digitized picture having an arbitrary number of pixels,
- in which at least one picture object (BO) having an arbitrary number of pixels (BP) is determined in the picture (B);
- in which the picture is divided into picture blocks,
- in which a motion estimation is carried out for the picture blocks,
- in which a pixel supplementation is carried out during the motion estimation of an object edge picture block (OBB) having at least one object edge (OK) of the picture object (BO), and
- in which the pixel supplementation is only carried out with regard to pixels situated within the picture object (BO).

2. Method according to Claim 1,
- in which, for the internal reconstruction of the picture, a motion compensation of the picture block for which a motion estimation was carried out is effected,
- in which a pixel supplementation is carried out during the motion compensation of the object edge picture block having at least one object edge of the picture object (BO), and
- in which the pixel supplementation is only carried out with regard to pixels situated within the picture object (BO).

3. Method according to Claim 1 or 2,
- in which coding information of supplemented pixels is stored, and
- in which the coding information is reused during the motion estimation of further picture blocks.

4. Method for the picture decoding of a digitized picture (B) having an arbitrary number of pixels (BP),
- in which the picture has at least one picture object (BO) having an arbitrary number of pixels,
- in which the picture has picture blocks (BB),
- in which a motion compensation is carried out for the picture blocks,
- in which a pixel supplementation is carried out during the motion compensation of an object edge picture block (OBB) having at least one object edge (OK) of the picture object (BO), and
- in which the pixel supplementation is only carried out with regard to pixels situated within the picture object (BO).

5. Method according to one of Claims 1 to 4,
- in which the pixel supplementation is effected according to one of the following procedures:
- the pixels to be supplemented are assigned a predeterminable value of an item of coding information,
- the pixels to be supplemented are assigned a value of an item of coding information, which value results from the coding information of pixels of the picture block for which no pixel supplementation is effected,
- the pixels to be supplemented are assigned a value of an item of coding information, which value results from an average value of the coding information of pixels of the picture block for which no pixel supplementation is effected,
- the pixels to be supplemented are assigned a value of an item of coding information, which value results from a low-pass filter supplementation of the coding information of pixels of the picture block for which no pixel supplementation is effected, or
- the pixels to be supplemented are assigned a value of an item of coding information, which value results after repetitive pixel supplementation.

6. Apparatus for the picture coding of a digitized picture (B) having an arbitrary number of pixels (BP), having a processor unit (P) which is set up in such a way that
- at least one picture object (BO) having an arbitrary number of pixels (BP) is determined in the picture;
- the picture is divided into picture blocks (BB),
- a motion estimation is carried out for the picture blocks,
- a pixel supplementation is carried out during the motion estimation of an object edge picture block (OBB) having at least one object edge (OK) of the picture object (BO), and
- the pixel supplementation is only carried out with regard to pixels situated within the picture object (BO).

7. Apparatus according to Claim 6,
in which the processor unit is set up in such a way that
- for the internal reconstruction of the picture, a motion compensation of the picture block for which a motion estimation was carried out is effected,
- a pixel supplementation is carried out during the motion compensation of the object edge picture block having at least one object edge of the picture object (BO), and
- the pixel supplementation is only carried out with regard to pixels situated within the picture object (BO).

8. Apparatus according to Claim 6 or 7,
in which the processor unit is set up in such a way that
- coding information of supplemented pixels is stored, and
- the coding information is reused during the motion estimation of further picture blocks.

9. Apparatus for the picture decoding of a digitized picture (B) having an arbitrary number of pixels (BP), having a processor unit (P) which is set up in such a way that
- the picture has at least one picture object (BO) having an arbitrary number of pixels (BP),
- the picture has picture blocks (BB),
- a motion compensation is carried out for the picture blocks,
- a pixel supplementation is carried out during the motion compensation of an object edge picture block (OBB) having at least one object edge (OK) of the picture object (BO), and
- the pixel supplementation is only carried out with regard to pixels situated within the picture object (BO).

10. Apparatus according to one of Claims 6 to 9,
in which the processor unit is set up in such a way that the pixel supplementation is effected according to one of the following procedures:
- the pixels to be supplemented are assigned a predeterminable value of an item of coding information,
- the pixels to be supplemented are assigned a value of an item of coding information, which value results from the coding information of pixels of the picture block for which no pixel supplementation is effected,
- the pixels to be supplemented are assigned a value of an item of coding information, which value results from an average value of the coding information of pixels of the picture block for which no pixel supplementation is effected,
- the pixels to be supplemented are assigned a value of an item of coding information, which value results from a low-pass filter supplementation of the coding information of pixels of the picture block for which no pixel supplementation is effected, or
- the pixels to be supplemented are assigned a value of an item of coding information, which value results after repetitive pixel supplementation.

## Revendications

1. Procédé de codage d'une image d'une image numérisée ayant un nombre quelconque de points d'image,
- dans lequel on détermine dans l'image (B) au moins un objet d'image (BO) contenant un nombre quelconque de points d'image (BP),
- dans lequel on divise ladite image en blocs d'image,
- dans lequel on effectue une estimation de mouvement pour lesdits blocs d'image,
- dans lequel, au moment de ladite estimation de mouvement d'un bloc d'image à bord d'objet (OBB) contenant au moins une arête d'objet (OK) de l'objet d'image (BO), on effectue un complément de points d'image et
- dans lequel on effectue ledit complément de points d'image uniquement par rapport aux points d'image se trouvant à l'intérieur de l'objet d'image (BO).

2. Procédé selon la revendication 1,
- dans lequel, en vue de la reconstruction interne de l'image, il est procédé à une compensation de mouvement du bloc d'image pour lequel une estimation de mouvement a été effectuée,
- dans lequel, au moment de ladite compensation de mouvement du bloc d'image à bord d'objet contenant au moins une arête d'objet de l'objet d'image (BO), on effectue un complément de points d'image et
- dans lequel on effectue ledit complément de points d'image uniquement par rapport aux points d'image se trouvant à l'intérieur de l'objet d'image (BO).

3. Procédé selon la revendication 1 ou 2,
- dans lequel on conserve en mémoire une information de codage des points d'image complétés et
- dans lequel on réutilise ladite information de codage au moment de l'estimation de mouvement d'autres blocs d'image.

4. Procédé de décodage d'une image d'une image numérisée (B) ayant un nombre quelconque de points d'image (BP),
- dans lequel l'image contient au moins un objet d'image (BO) contenant un nombre quelconque de points d'image,
- dans lequel l'image contient des blocs d'image (BB),
- dans lequel on effectue une compensation de mouvement pour lesdits blocs d'image,
- dans lequel, au moment de ladite compensation de mouvement d'un bloc d'image à bord d'objet (OBB) contenant au moins une arête d'objet (OK) de l'objet d'image (BO), on effectue un complément de points d'image et
- dans lequel on effectue ledit complément de points d'image uniquement par rapport aux points d'image se trouvant à l'intérieur de l'objet d'image (BO).

5. Procédé selon l'une des revendications 1 à 4,
dans lequel ledit complément de points d'image est effectué selon l'une des procédures suivantes :
- aux points d'image à compléter est attribuée une valeur définissable à l'avance d'une information de codage,
- aux points d'image à compléter est attribuée une valeur d'une information de codage, qui résulte de l'information de codage des points d'image du bloc d'image pour lesquels aucun complément de points d'image n'est effectué,
- aux points d'image à compléter est attribuée une valeur d'une information de codage, qui résulte d'une moyenne de l'information de codage des points d'image du bloc d'image pour lesquels aucun complément de points d'image n'est effectué,
- aux points d'image à compléter est attribuée une valeur d'une information de codage, qui résulte d'un complément passe-bas de l'information de codage de points d'image du bloc d'image pour lesquels aucun complément de points d'image n'est effectué ou
- aux points d'image à compléter est attribuée une valeur d'une information de codage, qui est obtenue après un complément répétitif de points d'image.

6. Dispositif de codage d'une image d'une image numérisée (B) ayant un nombre quelconque de points d'image (BP), comprenant un processeur (P) configuré de manière
- à déterminer dans l'image au moins un objet d'image (BO) contenant un nombre quelconque de points d'image,
- à diviser l'image en blocs d'image (BB),
- à effectuer une estimation de mouvement pour lesdits blocs d'image,
- à effectuer, au moment de ladite estimation de mouvement d'un bloc d'image à bord d'objet (OBB) contenant au moins une arête d'objet (OK) de l'objet d'image (BO), un complément de points d'image et
- à effectuer ledit complément de points d'image uniquement par rapport aux points d'image se trouvant à l'intérieur de l'objet d'image (BO).

7. Dispositif selon la revendication 6, dans lequel le processeur est configuré de manière
- à procéder, en vue de la reconstruction interne de l'image, à une compensation de mouvement du bloc d'image pour lequel une estimation de mouvement a été effectuée,
- à effectuer, au moment de ladite compensation de mouvement du bloc d'image à bord d'objet contenant au moins une arête d'objet de l'objet d'image (BO), un complément de points d'image et
- à effectuer ledit complément de points d'image uniquement par rapport aux points d'image se trouvant à l'intérieur de l'objet d'image (BO).

8. Dispositif selon la revendication 6 ou 7, dans lequel le processeur est configuré de manière
- à conserver en mémoire une information de codage des points d'image complétés et
- à réutiliser ladite information de codage au moment de l'estimation de mouvement d'autres blocs d'image.

9. Dispositif de codage d'une image d'une image numérisée (B) ayant un nombre quelconque de points d'image (BP), comprenant un processeur (P) configuré de telle sorte que
- l'image contient au moins un objet d'image (BO) contenant un nombre quelconque de points d'image (BP),
- l'image contient des blocs d'image (BB),
- une compensation de mouvement est effectuée pour lesdits blocs d'image,
- dans lequel, au moment de ladite compensation de mouvement d'un bloc d'image à bord d'objet (OBB) contenant au moins une arête d'objet (OK) de l'objet d'image (BO), un complément de points d'image est effectué et
- dans lequel ledit complément de points d'image est effectué uniquement par rapport aux points d'image se trouvant à l'intérieur de l'objet d'image (BO).

10. Dispositif selon l'une des revendications 6 à 9, dans lequel le processeur est configuré de telle sorte que le complément de points d'image est effectué selon l'une des procédures suivantes :
- aux points d'image à compléter est attribuée une valeur définissable à l'avance d'une information de codage,
- aux points d'image à compléter est attribuée une valeur d'une information de codage, qui résulte de l'information de codage des points d'image du bloc d'image pour lesquels aucun complément de points d'image n'est effectué,
- aux points d'image à compléter est attribuée une valeur d'une information de codage, qui résulte d'une moyenne de l'information de codage des points d'image du bloc d'image pour lesquels aucun complément de points d'image n'est effectué,
- aux points d'image à compléter est attribuée une valeur d'une information de codage, qui résulte d'un complément passe-bas de l'information de codage de points d'image du bloc d'image pour lesquels aucun complément de points d'image n'est effectué ou
- aux points d'image à compléter est attribuée une valeur d'une information de codage, qui est obtenue après un complément répétitif de points d'image.
